# EUROPÄISCHE PATENTANMELDUNG

(11) **EP 3 833 016 A1**
(43) Veröffentlichungstag der Anmeldung: **09.06.2021**
(21) Anmeldenummer: 19213006.0
(22) Anmeldetag: 02.12.2019
(51) Int. Cl.: H04N 9/31, G06F 3/01, H04L 12/28

(54) **GEBÄUDEAUTOMATIONSSYSTEM MIT EINEM EINEN PROJEKTOR AUFWEISENDEN BEDIENGERÄT**

(71) Anmelder: GIRA GIERSIEPEN GmbH & Co. KG, 42477 Radevormwald (DE)
(72) Erfinder: Seifert, Roland, 59071 Hamm (DE); Gediger, Frank, 42279 Wuppertal (DE)
(74) Vertreter: Angerhausen, Christoph

(57) **Zusammenfassung**

Die Erfindung betrifft ein Gebäudeautomationssystem mit einem Bediengerät (1), das über eine Datenschnittstelle mit einem Gebäudenetzwerk des Gebäudeautomationssystems in Verbindung steht, wobei das Bediengerät (1) einen Projektor (4) zur Projektion eines Benutzerinterface (5) auf eine Projektionsfläche (6) sowie Bewegungssensorik zur Erfassung einer Interaktion mit der Benutzerinterface (5) aufweist, dadurch gekennzeichnet, dass das Bediengerät (1) ein mobiles Bediengerät ist.

## Beschreibung

Die Erfindung geht aus von einem Gebäudeautomationssystem mit einem Bediengerät, das über eine Datenschnittstelle mit einem Gebäudenetzwerk des Gebäudeautomationssystems in Verbindung steht, wobei das Bediengerät einen Projektor zur Projektion eines Benutzerinterface auf eine Projektionsfläche sowie Bewegungssensorik zur Erfassung einer Interaktion mit dem Benutzerinterface aufweist. Ein derartiges Gebäudeautomationssystem ist aus der DE 20 2010 017 562 U1 bekannt.

Die aus dem Stand der Technik bekannten Gebäudeautomationssysteme haben den Nachteil, dass ihr Bediengerät stets für die Aufwandmontage ausgebildet und demgemäß unflexibel in der Handhabung ist. Beispielsweise wird daher schon aus Kostengründen für ein Gebäude einer bestimmten Größe lediglich eine limitierte Anzahl derartiger einen Projektor aufweisender Bediengeräte vorgesehen sein, die an der Wand montiert an charakteristischen Stellen des Gebäudes angeordnet sind. So können sie beispielsweise im Eingangsbereich des Gebäudes platziert Funktionen einer Wohnungsstation einer Türsprechanlage übernehmen, beispielsweise die Projektion des mit einer Kamera der Türstation der Türsprechanlage aufgenommenen Bildes auf die Gebäudewand, an welcher die Wohnungsstation montiert ist. Bei diesem Anwendungsfall ergibt sich weiterhin der Nachteil, dass im Falle eines Türrufs ein Bewohner des Gebäudes zunächst zu der Wohnungsstation im Eingangsbereich laufen muss, um sich dort durch Projektion das Bild der vor der Tür stehenden Person anzeigen zu lassen. Auch die Auslösung einer Freigabe eines elektrischen Türschlosses kann lediglich über eine Interaktion mit dem projizierten Benutzerinterface an der Wohnungsstation im Eingangsbereich erfolgen.

Es ist daher die Aufgabe der Erfindung, ein Gebäudeautomationssystem der eingangs beschriebenen Art derart weiterzuentwickeln, dass es die Projektion des Benutzerinterface auf einer beliebigen Projektionsfläche ermöglicht.

Diese Aufgabe wird durch ein Gebäudeautomationssystem mit den Merkmalen des Anspruchs 1 gelöst. Die abhängigen Ansprüche betreffen jeweils vorteilhafte Ausführungsformen der Erfindung.

Demgemäß ist vorgesehen, dass das Bediengerät ein mobiles Bediengerät ist. Dadurch wird erreicht, dass das Bediengerät von einem Benutzer mitgeführt und nicht nur, wie dies aus dem Stand der Technik bekannt ist, für die Wandprojektion sondern darüber hinaus für die Projektion des Benutzerinterface auf eine beliebige Projektionsfläche, beispielsweise auf eine horizontale Tischplatte, verwendet werden kann.

Das Bediengerät kann einen wiederaufladbaren elektrischen Energiespeicher und das Gebäudeautomationssystem eine Ladestation für den Energiespeicher aufweisen. Die Ladestation kann beispielsweise Bestandteil einer Wohnungsstation einer Türsprechanlage sein und anstelle eines Displays der Wohnungsstation verwendet werden. Beispielsweise kann die Ladestation in einem oberen Bereich eines auf der Wand montierten Gehäuses der Wohnungsstation angeordnet sein und das Benutzerinterface in einem Wandbereich oberhalb des Gehäuses der Wohnungsstation auf die Gebäudewand projizieren.

Das Benutzerinterface kann sowohl Bedienelemente für die manuelle Interaktion eines Benutzers mit dem Benutzerinterface aufweisen, beispielsweise eine projizierte Tastatur, einen Drehregler, oder dergleichen. Darüber hinaus kann das Benutzerinterface zusätzlich oder alternativ für eine optische Interaktion ausgelegt sein, beispielsweise die Projektion eines von einer Türstation aufgenommenen Kamerabildes aufweisen.

Die Ausprägung des Benutzerinterface kann von der Position und/oder von der Ausrichtung des Bediengeräts im Raum abhängig sein. Die Position und/oder die Ausrichtung des Bediengeräts im Raum kann beispielsweise mit einem Lage- und/oder Positionssensor des Bediengeräts erfasst werden. Beispielsweise kann das Benutzerinterface ein Kamerabild aufweisen oder sein, wenn es in die Ladestation eingesetzt ist. Letzteres kann über elektrische Kontakte des Bediengehäuses oder über einen Lage- und/oder Positionssensor des Bediengeräts erfasst werden kann. Es kann vorgesehen sein, dass das Benutzerinterface eine zweite Ausprägung aufweist, wenn das Bediengerät eine zweite Ausrichtung im Raum einnimmt, wobei die erste Ausprägung sich in mindestens einer Ausprägung von der zweiten Ausprägung unterscheiden kann. Es kann auch vorgesehen sein, dass die Ausprägung des Benutzerinterface unabhängig von dem Ort und/oder der Ausrichtung, der Position, oder der Lage des Bediengeräts ist. In diesem Falle kann vorgesehen sein, dass die Ausprägung des Benutzerinterface durch manuelle Betätigung mindestens eines Tasters oder Tastsensors oder mit Hilfe eines anderweitigen Bedienelements des Bediengeräts auswählbar und einstellbar ist. Alternativ kann die Ausprägung des Benutzerinterface durch eine Remonte-Ansteuerung erfolgen, etwa über eine Bedieneingabe eines Gebäudenetzwerks.

Die Ladestation kann für die Wandmontage ausgebildet sein. Dabei kann die Ladestation vorzugsweise für die Montage auf einer Unterputz-Dose vorgesehen sein. Darüber hinaus kann die Ladestation Mittel für die Selbstausrichtung des Bediengeräts in Bezug auf die Ladestation aufweisen, beispielsweise eine Formschlussaufnahme. Dadurch wird ermöglicht, dass das Bediengerät wenn es auf oder in die Ladestation auf- oder eingesetzt ist, eine definierte Ausrichtung in Bezug auf die Ladestation und damit in Bezug auf die Projektionsfläche einnimmt, welche beispielsweise eine Gebäudewand oberhalb, unterhalb oder seitlich von der Ladestation sein kann, wodurch reproduzierbar optisch hochqualitative Projektionen auf der Projektionsfläche wiedergegeben werden können. Darüber hinaus kann vorgesehen sein, dass die Ladestation und/oder das Bediengerät Mittel für die variable Einstellung der Ausrichtung der beiden zueinander oder des Bediengeräts in Bezug auf eine Projektionsfläche, etwa die Gebäudewand, aufweist.

Die Ladestation kann einen Montagesockel für die Montage der Ladestation auf einer Unterputz-Dose aufweisen. Weiterhin kann an einer der Unterputz-Dose zugewandten Seite des Montagesockels ein Netzteil für die Stromversorgung der Ladestation angeordnet sein. Dabei kann sich das Netzteil in die Unterputz-Dose hineinerstrecken.

Das Bediengerät kann ein Gerätgehäuse mit zwei unter einem Winkel und vorzugsweise senkrecht zueinander ausgerichteten Standflächen aufweisen, über welche das Bediengerät wahlweise auf einer Unterlage aufsetzbar ist. Das Bediengerät kann dabei eine Lageerkennung aufweisen, etwa einen Lage- und/oder Positionssensor, die dazu eingerichtet ist, zu erkennen, über welche der Standflächen das Bediengerät auf einer Unterlage aufgesetzt ist. Die Unterlage kann die Projektionsfläche sein, beispielsweise eine Tischplatte. Mindestens eine der Standflächen kann eine Standfläche sein, über welche das Bediengerät in eine Ladestation einsetzbar beziehungsweise auf dieser aufgesetzt werden kann.

Eine Projektionsrichtung des Projektors kann zu einer der beiden Standflächen einen spitzen Winkel und zu der anderen einen stumpfen Winkel einschließen. Dadurch kann erreicht werden, dass unabhängig davon, ob das Bediengerät mit seiner ersten oder mit seiner zweiten Standfläche auf einer Unterlage aufsteht, die Projektionsrichtung des Projektors unter einem spitzen Winkel zu einer jeweiligen Projektionsfläche aufsteht. Beispielsweise kann eine erste Projektionsfläche eine vertikale Gebäudewand sein, welche die Projektionsfläche aufweist oder bildet, wenn das Bediengerät über seine erste Standfläche in die Ladestation eingesetzt ist. Die zweite Projektionsfläche kann eine Auflagefläche sein, auf welcher das Bediengerät mit seiner zweiten Aufstandsfläche aufsteht und ist vorzugsweise eine horizontale oder im Wesentlichen horizontale Fläche.

Mindestens an einer der beiden Standflächen kann mindestens ein elektrischer Kontakt oder ein induktiver Ladekoppler des Bediengeräts angeordnet sein. Dadurch kann erreicht werden, dass mit dem Aufsetzen des Bediengeräts über seine den elektrischen Kontakt oder Ladekoppler aufweisende Standfläche auf die Ladestation ein in dem mobilen Bediengerät aufgenommener elektrischer Energiespeicher aufgeladen wird. Demgemäß können das Bediengerät und die Ladestation für das drahtgebundene und/oder das drahtlose Laden, etwa das induktive Laden, eines elektrischen Energiespeichers des Bediengeräts ausgelegt sein.

Der Projektor kann eine verstellbare Projektionsoptik aufweisen, die um eine Achse senkrecht zur Projektionsrichtung und parallel zu einer Gehäuseseite des Bediengeräts verschwenkbar ist, wobei die Projektionsoptik mindestens eine optische Linse und/oder mindestens einen optischen Spiegel aufweist. Darüber hinaus kann die Projektionsoptik auch insoweit verstellbar sein, dass eine Einstellung der Abmessungen der Projektionsfläche erreicht wird. Dazu kann die Projektionsoptik beispielsweise eine einstellbare Brennweite aufweisen. Die Projektionsoptik kann darüber hinaus einen einstellbaren Fokus aufweisen, um abhängig von einer Ausrichtung des Bediengeräts, beispielsweise abhängig davon, ob das Bediengerät über seine erste oder seine zweite Standfläche auf einer Unterlage aufsteht, eine jeweils in Bezug auf die Projektionsfläche bevorzugte Fokussierung der Projektionsoptik einnehmen zu können. Bei einem Laserprojektor ist ein einstellbarere Fokus verzichtbar, wodurch eine vereinfachte Bauweise des Bediengeräts erreicht werden kann. Um ein aufwendiges Autofokussystem zu vermeiden, kann hinaus vorgesehen sein, dass das Bediengerät einen Lage- und/oder Positionssensor aufweist, der von einer Steuer- und Regeleinheit ausgelesen ist, welche dazu eingerichtet ist, abhängig von einer von dem Lage- und/oder Positionssensor erfassten Ausrichtung des Bediengehäuses im Raum den Fokus der Projektionsoptik einzustellen. Die erfasste Ausrichtung kann beispielsweise die horizontale Ausrichtung einer ersten oder einer zweiten Standfläche des Gehäuses sein.

Dazu kann die Projektionsoptik mindestens eine verstellbare optische Linse und/oder mindestens einen verstellbaren, insbesondere verschwenkbaren optischen Spiegel aufweisen.

Die Projektionsoptik kann in zwei um einen Winkel um die zuvor genannte Achse verschwenkten Positionen jeweils eine Arretierung und/oder eine Rast- oder Anschlagposition aufweisen, wobei der Winkel vorzugsweise ein spitzer Winkel ist. Diese Ausführungsform kann dazu vorgesehen sein, dass von einem Benutzer manuell die Projektionsrichtung der Projektionsoptik angepasst werden kann, beispielsweise um bei engen Platzverhältnissen die Projektion näher an das Bediengerät heranzuführen.

Die Projektionsoptik kann zusätzlich oder alternativ einen Stellantrieb aufweisen, über den die Projektionsoptik, vorzugsweise mindestens eine optische Linse und/oder mindestens ein optischer Spiegel, um die zuvor genannte Achse verstellbar ist.

Wenn das Bediengerät einen Lage- und/oder Positionssensor aufweist, der von einer Regel- und Steuereinheit ausgelesen ist, kann letztere dazu eingerichtet sein, abhängig von einer von dem Lage- und/oder Positionssensor erfassten Lage und/oder Position des Bediengehäuses den Stellantrieb anzusteuern, die Projektionsoptik in eine von zwei um einen Winkel um die zuvor genannte Achse verschwenkte Position zu überführen oder ihre Projektionsdiagonale von einer ersten Diagonalenweite auf eine zweite Diagonalenweite einzustellen. Beispielsweise kann von einem Benutzer gewünscht sein, dass immer dann, wenn das Bediengerät in eine Ladestation eingesetzt ist, das von dem Projektor ausgeleuchtete Projektionsfeld bestimmte Abmessungen einnimmt, die beispielsweise danach ausgewählt sein können, welche sonstigen Einrichtungsgegenstände oder bauliche Limitierungen im Umfeld der Ladestation vorliegen, wobei die Ladestation auch bei dieser Ausführungsform beispielsweise Bestandteil einer Wohnungsstation einer Türsprechanlage sein kann, wozu weiter oben bereits ausgeführt wurde. Auf diese Weise kann eine Automatikfunktion für die Ausrichtung der Projektionsfläche realisiert sein.

Wenn das Bediengerät einen Lage- und/oder Positionssensor aufweist, der von einer Regel- und Steuereinheit ausgelesen ist, kann letztere dazu eingerichtet sein, abhängig von einer von dem Lage- und/oder Positionssensor erfassten Lage und/oder Position des Bediengeräts eine Schärfeebene des Projektors einzustellen. Beispielsweise kann vorgegeben sein, dass das Bediengerät, wann immer es über eine erste der beiden Standflächen aufsteht und diese demgemäß von dem Lage- und Positionssensor erfassbar horizontal ausgerichtet ist, die optischen Eigenschaften des Projektors, etwa die Schärfeebene des Projektors, danach eingestellt sein sollen, eine optimale Projektion auf eine Gebäudewand zu ermöglichen, wobei das Bediengerät, wenn es über die erste Standfläche in die Ladestation eingesetzt ist, einen definierten Abstand in Bezug auf die Gebäudewand einnimmt und demgemäß eine für eine optimale Abbildung erforderliche Schärfeebene des Projektors definiert ist und eingestellt werden kann. Analog kann von einem Benutzer eine zweite Standfläche des Bediengeräts dazu vorgesehen sein, eine optimale Abbildung des Benutzerinterface zu erzeugen, wenn das Bediengerät über die zweite Standfläche unmittelbar auf die Projektionsfläche aufgelegt ist, beispielsweise wenn das Bediengerät über die zweite Standfläche auf einer Tischplatte aufliegt, deren Oberfläche zugleich Projektionsfläche ist.

Demgemäß kann das Bediengerät ein Gerätegehäuse mit zwei unter einem Winkel, vorzugsweise zwei senkrecht zueinander ausgerichteten Standflächen aufweisen. Dabei kann vorgesehen sein, dass bei einer erfassten horizontalen Ausrichtung einer ersten der Standflächen der Projektor eine erste Schärfeebene aufweist. Analog kann vorgesehen sein, dass bei einer erfassten horizontalen Ausrichtung einer zweiten der beiden Standflächen der Projektor eine von der ersten abweichende zweite Schärfeebene aufweist. Vorzugsweise liegt eine der beiden Schärfeebenen in derselben Ebene wie eine der beiden Standflächen. Weiterhin vorteilhaft liegt eine zweite der beiden Schärfenebenen außerhalb einer der beiden Standflächen, beispielsweise parallel beabstandet von einer der beiden Standflächen und außerhalb des Gerätegehäuses bzw. einer Schnittebene des Gehäuses.

Beispielsweise kann die erste Standfläche eine Standfläche sein, über die das Bediengehäuse aufsteht, wenn es in einer Ladestation, vorzugsweise in einer Ladeschale steht. Das Bediengerät kann dabei mit der zweiten Standfläche unter einem Abstand zu einer ersten Projektionsfläche, vorzugsweise zu einer Gebäudewand angeordnet sein, wobei die zweite Standfläche eine Standfläche ist, über die das Bediengerät aufsteht, wenn es auf einer zweiten Projektionsfläche aufsteht.

Gemäß noch einer anderen Ausführungsform kann vorgesehen sein, dass der Projektor zwei Projektionsoptiken mit jeweils einer Projektionsrichtung aufweist, wobei die beiden Projektionsrichtungen einen vorzugsweise einstellbaren spitzen Winkel einschließen.

Weitere Einzelheiten der Erfindung werden anhand der nachstehenden Figuren erläutert. Dabei zeigt:
- Figur 1: in schematischer Darstellung eine beispielhafte Ausführungsform eines erfindungsgemäßen Gebäudeautomationssystems;
- Figur 2: in schematischer Querschnittsansicht ein Bediengerät, das auf eine Ladeschale aufgesetzt ist, gemäß einer beispielhaften Ausführungsform der Erfindung; und
- Figur 3: ein weiteres Bediengerät, welches auf eine Tischplatte aufgesetzt ist gemäß einer weiteren Ausführungsform der Erfindung.

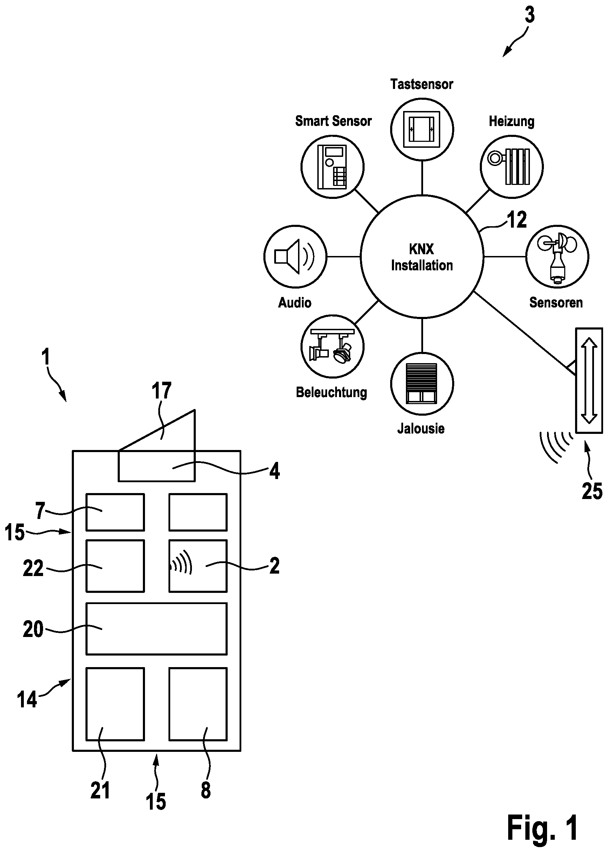

Die Figur 1 zeigt ein beispielhaftes Gebäudeautomationssystem, welches ein Bediengerät 1 aufweist, das über eine Datenschnittstelle 2 und einen Busankoppler 25 mit einem Gebäudenetzwerk 3 in Verbindung steht. Das Gebäudenetzwerk kann beispielsweise als ein gängiges Netzwerk für die Gebäudeautomation ausgebildet sein, etwa als ein KNX-Netzwerk. Alternativ kann das Gebäudenetzwerk jedoch lediglich ein Netzwerk für die Türkommunikation sein, beispielsweise ein Netzwerk einer Türsprechanlage, die gegebenenfalls eine Ton- und Bildübertragung zwischen einer Türstation und einer Wohnungsstation ermöglicht und darüber hinaus gegebenenfalls noch die Freigabe eines Türschlosses, um einer Person Einlass in das Gebäude zu gewähren.

Das Bediengerät 1 weist eine Gerätegehäuse 14 mit mindestens zwei senkrecht zueinander ausgerichteten Standflächen 15 auf, die von Außenseiten des Gerätegehäuses 14 gebildet sind. Das Bediengerät 1 ist dazu ausgelegt, unabhängig davon, über welche der beiden Standflächen 15 das Gerätegehäuse 14 auf einer Unterlage aufgesetzt ist, über den Projektor 4 des Bediengeräts 1 die Projektion eines Benutzerinterfaces 5 auf eine Projektionsfläche 6, beispielsweise auf eine Gebäudewand oder auf eine Tischplatte zu erlauben, wobei grundsätzlich vorgesehen sein kann, dass für die Projektion auf einer ersten Projektionsfläche, beispielsweise einer Gebäudewand, das Bediengerät 1 über eine erste der Standflächen 15 auf einer Unterlage aufgesetzt wird, während es für die Projektion auf einer zweiten, von der ersten abweichenden Projektionsfläche 6 über eine zweite der Standflächen 15 auf einer Unterlage aufgesetzt wird.

Wie es grundsätzlich aus der DE 20 2010 017 562 U1 bekannt ist, kann das Bediengerät Bewegungssensorik 7 zur Erfassung einer Interaktion mit dem Benutzerinterface 5 aufweisen. Erfindungsgemäß ist das Bediengerät 1 als ein mobiles Bediengerät 1 ausgebildet, um eine ortsungebundene Projektion des Benutzerinterface 5 auf einer nahezu beliebigen Projektionsfläche und damit die ortsungebundene Kommunikation mit dem Netzwerk 3 zu ermöglichen.

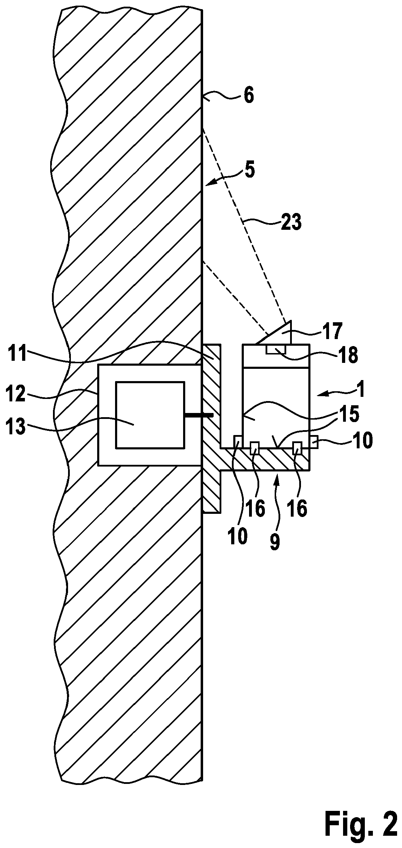

Das Bediengerät 1 weist weiterhin einen Energiespeicher 8 auf, der über Kontakte oder induktiv aufgeladen werden kann, beispielsweise indem das Bediengerät 1 in eine Ladestation 9 eingesetzt wird, wie dies in Figur 2 gezeigt ist. Die Ladestation kann nach Art einer Ladeschale ausgebildet sein und für die Wandmontage auf einer Unterputz-Dose 12 vorbereitet sein. Dazu kann die Ladeschale einen Montagesockel 11 für die Montage der Ladestation 9 auf der Unterputz-Dose 12 aufweisen. In der Unterputz-Dose 12 ist ein Netzteil 13 der Ladestation 9 angeordnet. In der Unterputz-Dose 12 kann das Netzteil mit Netzspannung versorgt werden und aus der Unterputz-Dose 12 heraus die Ladestation 9 mit einer Versorgungsspannung, insbesondere für den Betrieb der Spannungsversorgung 22 und eine Ladefunktion versorgen. In der Unterputz-Dose 12 kann auch noch weitere Elektronik aufgenommen sein, beispielsweise Schnittstellen zu dem Gebäudenetzwerk 3 oder zu weiteren funktionalen Elementen wie einer Wohnungsstation einer Türsprechanlage, wenn die Ladestation 9 Bestandteil einer Wohnungsstation ist und demgemäß das Bediengerät 1 mit seinem Projektor zur Projektion eines Kamerabildes der Türstation der Türsprechanlage dient.

Der Projektor 4 kann beispielsweise als Laser-Projektor ausgebildet sein und eine Projektorlinse 17 aufweisen. Die Projektorlinse 17 kann eine starre Linse oder eine starre Linsenanordnung, mithin ein Objektiv sein. Die Projektorlinse 17 beziehungsweise das Projektorobjetiv kann jedoch auch einstellbar sein, beispielsweise einen einstellbaren Fokus oder eine einstellbare Brennweite aufweisen. Darüber hinaus kann das Bediengerät 1 einen Lage- und Positionssensor 19 aufweisen, der von einer Regel- und Steuereinheit 20 ausgelesen wird, wobei letztere dazu eingerichtet sein kann, abhängig von einer Ausrichtung oder Lage des Bediengeräts 1 die Projektionsoptik 17 einzustellen, einen bestimmten Fokus oder eine bestimmte Brennweite aufzuweisen. Beispielsweise kann das Bediengerät 1 in der in Figur 2 gezeigten aufrechten Stellposition, bei welcher das Bediengerät 1 mit einer bestimmten seiner beiden Standflächen 15 auf der Ladestation 9 aufsteht, dazu eingerichtet sein, einen bestimmten Fokus und/oder eine bestimmte Brennweite der Projektionsoptik 17 einzustellen. Dazu kann die horizontale Ausrichtung der betreffende Standfläche 15 mit dem Lage- und/oder Positionssensor 19 erfasst werden, über die das Bediengerät 1 in der Ladestation 9 aufsteht. Über die Regel- und Steuereinheit 20 kann die bestimmte Ausrichtung mit einer Positionierung des Bediengeräts 1 in der Ladestation 9 verknüpft sein, wobei bei der Einstellung der Projektionsoptik 17, beispielsweise des Fokus oder der Brennweite der Projektionsoptik 17 beispielsweise berücksichtigt wird, dass das Bediengerät 1 unter einem bestimmten Abstand zu der Gebäudewand, insbesondere der die Projektionsfläche 6 bildenden Oberfläche der Gebäudewand angeordnet ist.

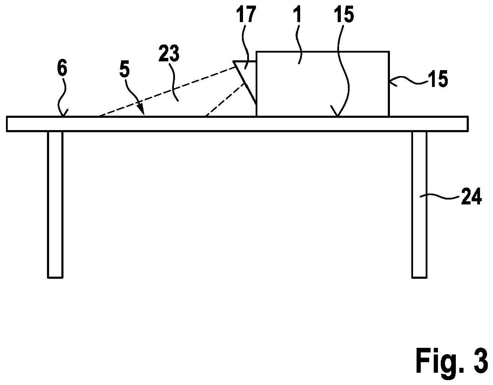

Davon abweichend ist in Figur 3 gezeigt, dass, wenn das Bediengerät 1 über seine zweite Standfläche 15 auf einer Unterlage aufgelegt ist, wobei die zweite Standfläche 15 horizontal ausgerichtet ist, die zweite Standfläche 15 in der Ebene der Projektionsfläche 6 liegt, so dass ausgehend von der Einstellung des Projektionsobjektivs 17 bei der Anordnung des Bediengeräts 1 gemäß Figur 2 eine abweichende Einstellung der Projektionsoptik 17 gewählt wird, beispielsweise eine Variation der Brennweite und/oder des Fokus der Projektionsoptik 17. Demgemäß kann über die Regel- und Steuereinheit 20 vorgesehen sein, dass, wenn immer von dem Lage- und/oder Projektionssensor 19 eine horizontale Ausrichtung der zweiten Standfläche 15 erfasst wird, wie dies in Figur 3 gezeigt ist, davon auszugehen ist, dass das Bediengerät 1 unmittelbar auf einer Fläche aufliegt, welche die Projektionsfläche ist, so dass über die Regel- und Steuereinheit 20 eine für die optimale Abbildung des Benutzerinterface auf der Projektionsfläche 6 eine entsprechende Einstellung der Projektionsoptik 17, beispielsweise hinsichtlich Fokus und Brennweite vorgenommen werden kann.

Die in den Figuren 1 bis 3 gezeigten Ausführungsformen veranschaulichen, dass mit Hilfe eines erfindungsgemäßen Gebäudeautomationssystems eine variable Einstellung der Position der Bedienfläche, welche das Benutzerinterface bildet, möglich ist beziehungsweise dass das Benutzerinterface oder die Bedienfläche eine von der Ausrichtung des Bediengeräts abhängige Ausprägung aufweisen kann. Die Oberflächen, auf welche das Benutzerinterface projiziert wird, sind auf keine bestimmten beschränkt und können beispielsweise eine Gebäudewand, eine Arbeitsplatte, eine Leinwand, oder dergleichen sein. Durch die Verwendung geeigneter Sensorik kann über die Ausrichtung beziehungsweise Positionierung des Bediengeräts ein Anwendungsfall des Bediengeräts erfasst und eine entsprechende Voreinstellung des Projektors vorgenommen werden. Beispielsweise kann bei einer ausrichtungsabhängigen Verwendung des Bediengeräts 1 als ein Projektor für ein Kamerabild einer Türkommunikationskamera eine bestimmte Projektionsweite vorgegeben werden. Alternativ oder zusätzlich kann vorgesehen sei, dass das Bediengerät 1 geeignete Sensorik aufweist, die dazu eingerichtet ist, ein Benutzerinterface des Bediengeräts 1 in Abhängigkeit eines Raumes/Zimmers, in welchem das Bediengerät 1 angeordnet ist, auszubilden.

Das Bediengerät 1 kann weiterhin einen Näherungssensor 26 aufweisen, der dazu eingerichtet ist, bei einer Annäherung einer Person an das Bediengerät 1 eine Aktivierung beziehungsweise Deaktivierung des Projektors 4 zu veranlassen. Dabei kann vorgesehen sein, dass der Näherungssensor 26 nur dann aktiviert ist, das heißt nur dann eine Initiierung oder Unterbrechung der Projektion veranlasst, wenn das Bediengerät 1 eine bestimmte Ausrichtung aufweist, beispielsweise eine bestimmte Aufstandsseite 15 des Bediengeräts 1 horizontal ausgerichtet ist. Die Ausrichtung beziehungsweise definierte Positionierung des Bediengeräts 1 kann auch mit Hilfe von elektrischen Kontakten 16 an der betreffenden Aufstandsfläche 15 realisiert sein. Beispielsweise kann über das Herstellen eines elektrischen Kontaktes zur Aufladung eines elektrischen Energiespeichers 8 des Bediengeräts beim Einsetzen des Bediengeräts 1 in eine Ladestation 9 die Ausrichtung des Bediengeräts erkannt und demgemäß der Näherungssensor 26 aktiviert werden kann, um das Bediengerät 1 in einen Betriebsmodus für die Funktion als Anzeigeelement eines von einer Türstation aufgenommenen Kamerabildes zu bringen, wobei das Kamerabild nur dann angezeigt wird, wenn über den aktivierten Näherungssensor 26 die Annäherung einer Person an das Bediengerät 1 erfasst worden ist.

Des Weiteren kann auch vorgesehen sein, je nach Art der Funktion, welche über das Benutzerinterface projiziert wird, den Formfaktor der projizierten Fläche bedarfsgerecht anzupassen. Beispielsweise kann ein runder Formfaktor für einen Drehdimmer vorgesehen sein, ein rechteckiger Formfaktor für die Projektion der Nachbildung eines 8-fach-Tastsensors, usw. Das projizierte Bedienfeld kann über die Bewegungssensorik auf eine Interaktion überwacht werden, so dass ein Benutzer beispielsweise mit seiner Hand auf die projizierte Bedienoberfläche tippen oder zeigen und damit eine Funktion beziehungsweise Aktion zur Ansteuerung des Gebäudeautomationssystems auslösen kann. Dabei kann vorgesehen sein, dass ein direktes Berühren der Projektionsoberfläche 6 nicht erforderlich ist. Das Erkennungsfeld kann so eingestellt werden, dass zirka 1 cm bis 4 cm vor der Oberfläche die gewollte Aktion des Nutzers erkannt und ausgelöst wird.

Darüber hinaus kann das Bediengerät mindestens ein Mikrofon 21 oder einen Lautsprecher 21 aufweisen, um beispielsweise eine Sprachsteuerung zu ermöglichen. Die Verbindung des Bediengeräts 1 zu dem Gebäudenetzwerk kann vorzugsweise über eine Funkschnittstelle 2 realisiert sein, beispielsweise eine WLAN-Schnittstelle oder eine Bluetooth-Schnittstelle, welche mit einem Busankoppler 25 des Netzwerks 3 in Verbindung steht.

In Figur 2 ist weiterhin gezeigt, dass das projizierte Benutzerinterface 5, welches auf die Gebäudewand projiziert ist, eine einstellbare Höhe aufweist. Die Höhe kann beispielsweise zwischen 1,1 m bis 1,6 m variabel sein. Mit Hilfe der einstellbaren Projektionsoptik 17 kann das Benutzerinterface nach oben, nach unten, nach rechts oder nach links vom Anbringungsort der Ladestation 9 verlagert projiziert werden.

Das Bediengerät 1 kann weiterhin zusätzliche Sensoren für die Erfassung von Temperatur, Feuchte, einer Luftqualität, beispielsweise CO2 oder dergleichen aufweisen. Darüber hinaus eine optische und/oder akustische Alarmierung sowie die Ausgabe einer entsprechenden Information über ein als Benutzerinterface projiziertes Textelement realisiert sein. Das Bediengerät 1 kann dazu eingerichtet sein, eine operative (oder "gefühlte") Temperatur zu erfassen, indem mit Hilfe des Bediengeräts 1 die Messung gerade dort stattfinden kann, wo sich der Nutzer aufhält, so dass auf in der Regel unpräzise externe Wetterdaten, etwa von einem Wetterdienst, verzichtet werden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Bediengerät
- 2: Datenschnittstelle
- 3: Gebäudenetzwerk
- 4: Projektor
- 5: Benutzerinterface
- 6: Projektionsfläche
- 7: Bewegungssensorik
- 8: Energiespeicher
- 9: Ladestation
- 10: Mittel
- 11: Montagesockel
- 12: Unterputz-Dose
- 13: Netzteil
- 14: Gerätegehäuse
- 15: Standfläche
- 16: Kontakt
- 17: Projektionsoptik
- 18: Stellantrieb
- 19: Lage- und/oder Positionssensor
- 20: Regel- und Steuereinheit
- 21: Lautsprecher/Mikrophon
- 22: Spannungsversorgung
- 23: Projektionskegel
- 24: Tisch
- 25: Busankoppler
- 26: Näherungssensor

## Patentansprüche

1. Gebäudeautomationssystem mit einem Bediengerät (1), das über eine Datenschnittstelle (2) mit einem Gebäudenetzwerk (3) des Gebäudeautomationssystems in Verbindung steht, wobei das Bediengerät (1) einen Projektor (4) zur Projektion eines Benutzerinterface (5) auf eine Projektionsfläche (6) sowie Bewegungssensorik (7) zur Erfassung einer Interaktion mit der Benutzerinterface (5) aufweist, **dadurch gekennzeichnet, dass** das Bediengerät (1) ein mobiles Bediengerät (1) ist.

2. Gebäudeautomationssystem nach Anspruch 1, bei dem das Bediengerät (1) einen wiederaufladbaren elektrischen Energiespeicher (8) und das Gebäudeautomationssystem eine Ladestation (9) für den Energiespeicher (8) aufweist, wobei die Ladestation vorzugsweise eine Ladestation einer Wohnungsstation einer Türsprechanlage ist.

3. Gebäudeautomationssystem nach Anspruch 2, bei dem die Ladestation (9) für die Wandmontage ausgebildet ist, vorzugsweise für die Montage auf einer Unterputz-Dose (12), wobei die Ladestation (9) Mittel (10) für die Selbstausrichtung des Bediengeräts (1) in Bezug auf die Ladestation (9), vorzugsweise eine Formschlussaufnahme, aufweist, so dass bei in die Ladestation (9) eingesetztem Bediengerät (1) das Bediengerät (1) in einer definierten Ausrichtung in Bezug auf die Ladestation (9) ausgerichtet ist.

4. Gebäudeautomationssystem nach Anspruch 2 oder 3, bei dem die Ladestation (9) einen Montagesockel (11) für die Montage der Ladestation (9) auf einer Unterputz-Dose (12) aufweist und an einer der Unterputz-Dose (12) zugewandten Seite des Montagesockels (11) ein Netzteil (13) für die Stromversorgung der Ladestation (9) angeordnet ist, das sich in die Unterputz-Dose (12) hinein erstreckt.

5. Gebäudeautomationssystem nach einem der vorangegangenen Ansprüche, bei dem das Bediengerät (1) ein Gerätegehäuse (14) mit zwei senkrecht zueinander ausgerichteten Standflächen (15) aufweist.

6. Gebäudeautomationssystem nach Anspruch 5, bei dem eine Projektionsrichtung des Projektors (4) zu einer der beiden Standflächen (15) einen spitzen Winkel und zu der anderen einen stumpfen Winkel einschließt.

7. Gebäudeautomationssystem nach Anspruch 5 oder 6, bei dem an einer der beiden Standflächen (15) mindestens ein elektrischer Kontakt (16) oder ein induktiver Ladekoppler des Bediengeräts (1) angeordnet ist.

8. Gebäudeautomationssystem nach einem der vorangegangenen Ansprüche, bei dem der Projektor (4) eine verstellbare Projektionsoptik (17) aufweist, die um eine Achse senkrecht zur Projektionsrichtung und parallel zu einer Gehäuseseite des Bediengeräts (1) verschwenkbar ist, wobei die Projektionsoptik (17) mindestens eine optische Linse und/oder mindestens einen optischen Spiegel aufweist.

9. Gebäudeautomationssystem nach Anspruch 8, bei dem die Projektionsoptik (17) in zwei um einen Winkel um die Achse verschwenkten Positionen jeweils eine Arretierung und/oder eine Rast- oder Anschlagposition aufweist, wobei der Winkel vorzugsweise ein spitzer Winkel ist.

10. Gebäudeautomationssystem nach Anspruch 8 oder 9, bei dem die Projektionsoptik (17) einen Stellantrieb (18) aufweist, über den die Projektionsoptik (17), vorzugsweise mindestens eine optische Linse und/oder mindestens ein optischer Spiegel, um die Achse verstellbar ist.

11. Gebäudeautomationssystem nach Anspruch 10, bei dem das Bediengerät (1) einen Lage- und/oder Positionssensor (19) aufweist, der von einer Regel- und Steuereinheit (20) ausgelesen ist, die dazu eingerichtet ist, abhängig von einer von dem Lage- und/oder Positionssensor (19) erfassten Lage und/oder Position den Stellantrieb (18) anzusteuern, die Projektionsoptik (17) in eine von zwei um einen Winkel um die Achse verschwenkte Positionen zu überführen oder ihre Projektionsdiagonale von einer ersten Diagonalenweite auf eine zweite Diagonalenweite einzustellen.

12. Gebäudeautomationssystem nach einem der vorangegangenen Ansprüche, bei dem das Bediengerät (1) einen Lage- und/oder Positionssensor (19) aufweist, der von einer Regel- und Steuereinheit (20) ausgelesen ist, die dazu eingerichtet ist, abhängig von einer von dem Lage- und/oder Positionssensor (19) erfassten Lage und/oder Position des Bediengeräts (1) eine Schärfeebene des Projektors (4) einzustellen.

13. Gebäudeautomationssystem nach Anspruch 12, bei dem das Bediengerät (1) ein Gerätegehäuse (14) mit zwei unter einem Winkel, vorzugsweise zwei senkrecht zueinander ausgerichteten Standflächen (15) aufweist, wobei bei einer erfassten horizontalen Ausrichtung einer ersten der Standflächen (15) der Projektor (4) eine erste Schärfeebene aufweist, und wobei bei einer erfassten horizontalen Ausrichtung einer zweiten der Standflächen (15) der Projektor (4) eine von der ersten abweichende zweite Schärfeebene aufweist.

14. Gebäudeautomationssystem nach einem der vorangegangen Ansprüche, bei dem die erste Standfläche (15) eine Standfläche (15) ist, über die das Bediengerät (1) aufsteht, wenn es in einer Ladestation (9), vorzugsweise in einer Ladeschale steht, wobei das Bediengerät (1) mit der zweiten Standfläche (15) unter einem Abstand zu einer ersten Projektionsfläche (6), vorzugsweise einer Gebäudewand angeordnet ist, und wobei die zweite Standfläche (15) eine Standfläche (15) ist, über die das Bediengerät (1) aufsteht, wenn es auf einer zweiten Projektionsfläche (6) aufsteht.

15. Gebäudeautomationssystem nach einem der vorangegangenen Ansprüche, bei dem der Projektor (4) zwei Projektionsoptiken (17) mit jeweils einer Projektionsrichtung aufweist, wobei die beiden Projektionsrichtungen einen vorzugsweise einstellbaren spitzen Winkel einschließen.
